# EUROPEAN PATENT SPECIFICATION

(11) **EP 0 738 478 B1**
(45) Date of publication and mention of the grant of the patent: **26.07.2000**
(21) Application number: 96105909.4
(22) Date of filing: 15.04.1996
(51) Int. Cl.: A24C 5/35, B65G 47/51

(54) **Variable-capacity store for elongated elements**
Variierbare Kapazitätspeicher für längliche Objekte
Magazin de capacité variable pour objets allongés

(30) Priority: 18.04.1995 IT BO950172
(43) Date of publication of application: 23.10.1996
(73) Proprietor: G.D SOCIETA' PER AZIONI, I-40100 Bologna (IT)
(72) Inventor: Cesari, Marco, 40043 Marzabotto (IT); Draghetti, Fiorenzo, 40059 Medicina (IT)
(74) Representative: Jorio, Paolo

(56) References cited:
- EP-A- 0 581 143
- DE-A- 2 006 090
- FR-A- 2 617 136
- GB-A- 2 098 568
- GB-A- 2 143 788
- GB-A- 2 263 680
- US-A- 5 018 334

## Description

The present invention relates to a variable-capacity store for elongated elements.

In particular, the present invention may be applied to advantage for storing cigarettes, to which the following description refers purely by way of example.

For storing cigarettes, a variable-capacity store is interposed between a cigarette manufacturing machine and a packing machine to compensate for any difference in the number of cigarettes produced and the number packed.

Patents EP 581,143 and GB 995,663 relate to variable-capacity stores of the "first in, first out" type, and which comprise a conveyor device for feeding a mass of cigarettes along a given path, and in turn comprising a first and second transportation branch extending in series from an input station to an output station at respective ends of said path. The first and second transportation branches are connected to each other by a deflecting device, which is movable along the transportation branches to vary the lengths of the branches occupied by the cigarettes and, hence, the capacity of the store.

A drawback of variable-capacity stores of the above type is that, at the crossover points between the deflecting device and the first and second transportation branches, the cigarettes are stressed continually by the deflecting device and subject to damage.

It is an object of the present invention to provide a variable-capacity store of the "first in, first out" type, designed to overcome the aforementioned drawback.

According to the present invention, there is provided a variable-capacity store for elongated elements, in particular tobacco products, the store comprising an input station and an output station located in series along a path along which the elongated elements are fed; and conveying means for conveying said elongated elements, said conveying means extending between the input and output stations and presenting a variable length; characterized in that said conveying means comprise a continuous endless conveyor defined by a transportation branch for transporting said elongated elements, and by a return branch, said transportation branch and said return branch respectively presenting a first length and a second length complementary to each other; said transportation branch extending from said input station to said output station; said return branch extending from said output station to said input station; and varying means being provided for varying said lengths in complementary manner.

According to a preferred embodiment of the above store, said varying means comprise first transmission means connected to the transportation branch and adjustable to define, along the transportation branch, a first spiral of adjustable length; and second transmission means connected to the return branch and adjustable to define, along the return branch, a second spiral presenting a length variable in a manner complementary to the length of the first spiral.

Preferably, in the above store, said first transmission means comprise a first supporting device for supporting said first spiral, and said second transmission means comprise a second supporting device for supporting said second spiral; said varying means comprising actuating means for expanding and contracting said first and second supporting devices to adjust the lengths of said spirals.

Moreover, preferably, said first supporting device comprises at least two first drums for transmission and support of said first spiral; said second supporting device comprising at least two second drums for transmission and support of said second spiral; said actuating means varying a center distance of said first drums, and a center distance of said second drums.

Two non-limiting embodiments of the present invention will be described by way of example with reference to the accompanying drawings, in which:
Figure 1 shows a view in perspective, with parts removed for clarity, of a first preferred embodiment of the store according to the present invention;
Figure 2 shows a view in perspective, with parts removed for clarity, of a second preferred embodiment of the store according to the present invention.

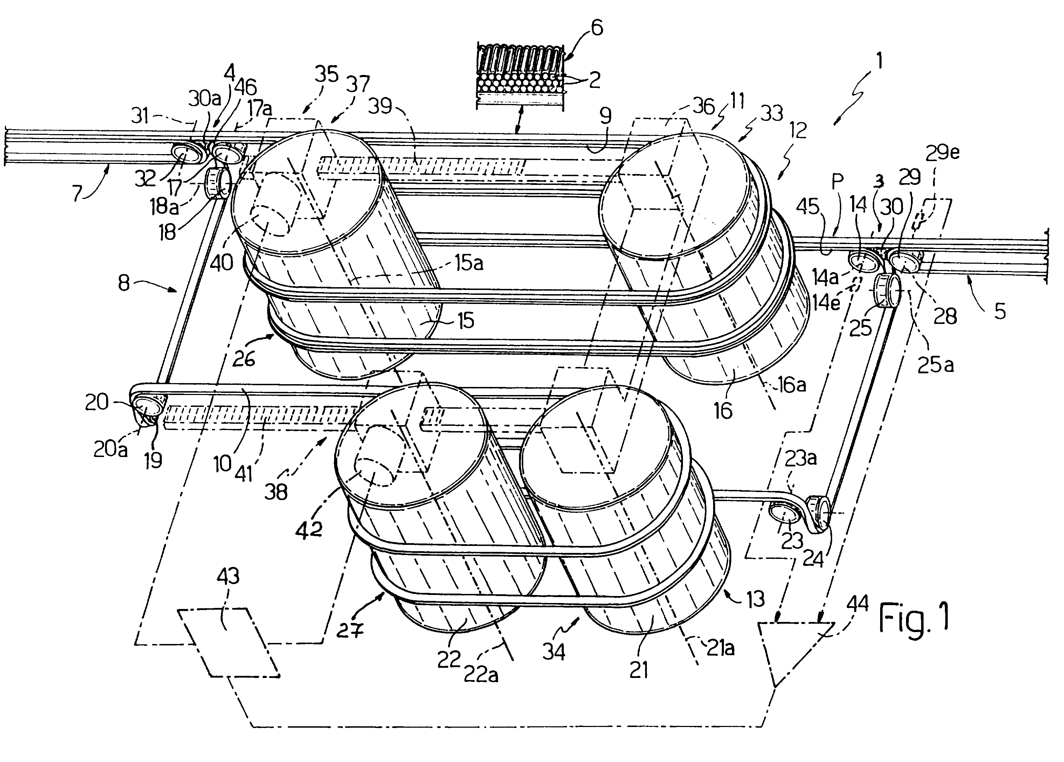

Number 1 in Figure 1 indicates a variable-capacity store for elongated elements 2, in particular cigarettes, and comprising, for elements 2, an input station 3 and an output station 4 located in series along the path P of elements 2. More specifically, store 1 provides for storing a quantity of elements 2 depending on a freely variable storage capacity, and for supplying station 4 with the elements 2 which, in use, are fed first into store 1 at station 3.

The output conveyor 5, at station 3, of a manufacturing machine (not shown) supplies store 1 with a number of elements 2 randomly arranged in a continuous stream 6, and store 1 supplies elements 2 to the input conveyor 7, at station 4, of a packing machine (not shown).

Store 1 also comprises an endless conveyor 8 presenting a transportation branch 9 extending and for transporting elements 2 from station 3 to station 4, and a return branch 10 extending from station 4 to station 3. Store 1 also comprises a variator assembly 11 for varying the length L1 of transportation branch 9 and the length L2 of return branch 10 in complementary manner, and so varying the storage capacity of store 1.

Variator assembly 11 comprises two transmission assemblies 12, 13, the first of which is associated with transportation branch 9 and presents respective transmissions 14-17, and the second of which is associated with return branch 10 and presents respective transmissions 18-25. In the example embodiment in Figure 1, conveyor 8 is defined by a conveyor belt wound about transmissions 14-25, and which forms a first spiral 26 of a given pitch P1 about transmissions 15 and 16 of assembly 12, and a second spiral 27 of a given pitch P2, in this case equal to P1, about transmissions 21 and 22 of assembly 13.

Transmissions 14 and 25 are located at station 3, and are defined by respective pulleys mounted for rotation about respective axes 14a and 25a perpendicular to each other; axis 14a is parallel to the axis 28 of a transmission pulley 29 of conveyor 5; and pulleys 14 and 29 are connected at the top by a plate 30 for supporting elements 2 entering store 1, and each present a respective encoder 14e, 29e for measuring its angular operating speed. Transmissions 17 and 18 are located at station 4, and are defined by respective pulleys mounted for rotation about respective axes 17a and 18a perpendicular to each other; axis 17a is parallel to both axis 14a and the axis 31 of a transmission pulley 32 of conveyor 7; and pulleys 17 and 32 are connected at the top by a plate 30a for supporting elements 2 leaving store 1, and are powered in known manner so as to present, in use, the same surface speed. More specifically pulley 17 provides for driving conveyor 8.

The pairs of pulleys 14,25 and 17,18 define transportation branch 9 extending from pulley 14 to pulley 17, and return branch 10 extending from pulley 18 to pulley 25. Transmissions 20 and 23 are defined by respective pulleys mounted for rotation about respective axes 20a and 23a, which are parallel to each other and respectively to axes 17a and 14a, and are aligned respectively with axes 17a and 14a.

Transmission assemblies 12 and 13 of variator assembly 11 comprise respective supporting devices 33 and 34 for respectively supporting spiral 26 of transportation branch 9 and spiral 27 of return branch 10, and which are respectively defined by transmissions 15, 16 and transmissions 21, 22. Transmissions 15 and 16 are defined by respective circular-section drums presenting respective axes 15a and 16a perpendicular to the plane defined by axes 14a and 25a; and transmissions 21 and 22 are defined by respective circular-section drums of substantially the same size as drums 15 and 16, and presenting respective axes 21a and 22a parallel to axes 15a and 16a and perpendicular to the plane defined by axes 17a and 18a.

The pairs of drums 15, 16 and 21, 22 respectively support spiral 26 and spiral 27 in known manner, e.g. by means of a helical groove (not shown) formed on the outer surface of drums 15, 16 and 21, 22, so that conveyor 8 is movable in relation to drums 15, 16 and 21, 22, and so that at least transportation branch 9 presents a given radius of curvature such as to ensure a continuous stream 6 of elements 2 along the whole of spiral 26. Drums 15 and 22 are also movable to and from respective drums 16 and 21, and are guided by respective guides (not shown) parallel to each other and so located that spirals 26 and 27 are located side by side.

Variator assembly 11 also comprises an actuating device 35 associated with drums 15, 16, 21 and 22, and which provides for moving drums 15 and 22 along the respective guides (not shown) and in opposite directions to vary lengths L1 and L2 and, hence, the storage capacity of store 1. Actuating device 35 comprises a cross member 36 for supporting drums 16 and 21; and two rack devices 37 and 38 associated respectively with devices 33 and 34. Device 37 in turn comprises a rack 39 extending transversely from cross member 36, and a powered sprocket 40 integral with drum 15 and meshing with rack 39 to move drum 15 to and from drum 16; and device 38 in turn comprises a rack 41 extending transversely from cross member 36 and parallel to rack 39, and a powered sprocket 42 integral with drum 22 and meshing with rack 41 to move drum 22 to and from drum 21.

Variator assembly also comprises a known central control unit 43 connected to sprockets 40 and 42, and which provides for so controlling displacement of sprockets 40 and 42 along respective racks 39 and 41 that, when drum 15 is moved, in use, to or from drum 16, drum 22 is moved away from or towards drum 21. Control unit 43 is also connected to a comparator circuit 44, which is supplied with a known signal from each encoder 14e, 29e, and in turn supplies control unit 43 with an error signal proportional to the difference between the angular speeds of pulleys 14 and 29 to regulate said displacement of drums 15 and 22.

In actual use, elements 2 are fed continuously by conveyor 5, at station 3, over plate 30 to the input portion 45 of transportation branch 9, and are fed by branch 9 to the output portion 46 of branch 9 at station 4, where the elements 2 first entering store 1 are fed over plate 30a on to conveyor 7.

Under normal operating conditions, the number of elements 2 fed to station 3 by conveyor 5 equals the number of elements 2 absorbed at station 4 by conveyor 7, so that output portion 46 presents the same linear speed as conveyor 5; circuit 44 supplies control unit 43 with a zero error signal; and sprockets 40 and 42 maintain drums 15 and 22 at the same distance from respective drums 16 and 21.

In the event the number of elements 2 supplied to station 3 is greater than the number of elements 2 absorbed at station 4, circuit 44 supplies a first error signal to control unit 43, which moves sprockets 40 and 42 along respective racks 39 and 41 in such a manner as to move drum 15 away from drum 16 and drum 22 towards drum 21, depending on the difference between the incoming and outgoing number of elements 2. The away movement of drum 15 in relation to drum 16 increases the storage capacity of store 1, but requires that transportation branch 9 wound about drums 15 and 16 be lengthened accordingly. The amount of conveyor 8 required to compensate for the increase in length of branch 9 is therefore provided by moving drum 22 towards drum 21.

Conversely, in the event the number of elements 2 supplied to station 3 is less than the number of elements 2 absorbed at station 4, circuit 44 supplies a second error signal to control unit 43, which moves sprockets 40 and 42 along respective racks 39 and 41 in such a manner as to move drum 15 towards drum 16 and drum 22 away from drum 21, depending on the difference between the incoming and outgoing number of elements 2. The toward movement of drum 15 in relation to drum 16 reduces the storage capacity of store 1, but requires that transportation branch 9 wound about drums 15 and 16 be shortened accordingly. The excess amount of conveyor 8 is therefore taken up by moving drum 22 away from drum 21.

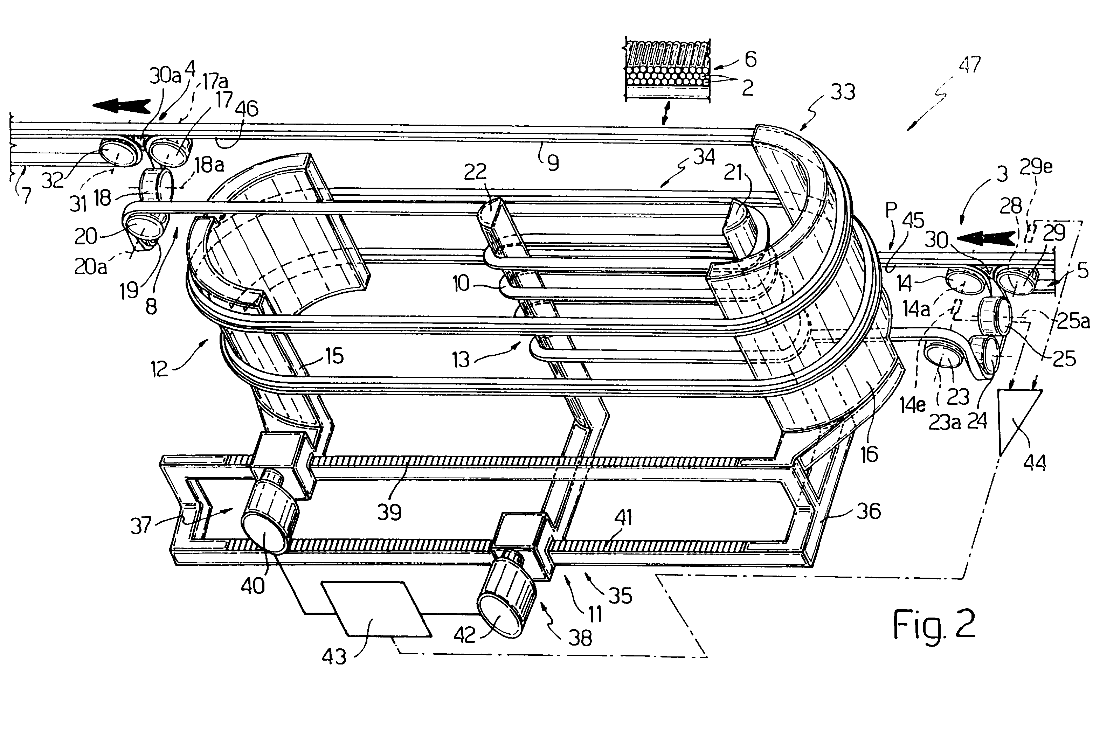

The Figure 2 embodiment relates to a store 47 similar to store 1, except that drums 15, 16, 21, 22 present a hollow semicircular section as opposed to a circular section, and drums 21 and 22 are located in the space between drums 15 and 16, so that spiral 27 is located inside spiral 26, and are guided by a single guide (not shown).

Moreover, since branch 10 is not called upon to transport elements 2, and spiral 27 may therefore be wound about drums 21 and 22 with any radius of curvature, pitch P2 of spiral 27 differs from, in this case is smaller than, pitch P1 of spiral 26. Consequently, drums 21 and 22 differ in size from drums 15 and 16, thus permitting the above arrangement, which obviously provides for a reduction in overall size as compared with store 1.

Operation of store 47 is easily discernible from that of store 1, and therefore requires no further explanation.

According to an embodiment not shown, the storage capacity of the above stores may be further modified by simply winding spirals 26 and 27 about more than two drums each, to form triangular, square, or, at any rate, polygonal patterns permitting any storage capacity.

While not affording a reduction in size, as in the case of store 47, the addition of further drums provides, for a given overall size, for a different store structure, which possibility may be used to advantage when defining the layout of a tobacco product manufacturing line.

According to a further embodiment not shown, spirals 26 and 27 may extend one over the other on respective superimposed drums.

Finally, the control function performed by encoders 14e and 29e may be performed by any known type of control device for determining, for example, the level of the free surface of elements 2 at any part of stores 1, 47 or the conveyors feeding elements 2 in and out of stores 1, 47.

## Claims

1. A variable-capacity store (1; 47) for elongated elements (2), in particular tobacco products, the store (1; 47) comprising an input station (3) and an output station (4) located in series along a path (P) along which the elongated elements (2) are fed; and conveying means (8) for conveying said elongated elements (2), said conveying means (8) extending between the input and output stations (3, 4) and presenting a variable length; characterized in that said conveying means (8) comprise a continuous endless conveyor (8) defined by a transportation branch (9) for transporting said elongated elements (2), and by a return branch (10), said transportation branch (9) and said return branch (10) respectively presenting a first length (L1) and a second length (L2) complementary to each other; said transportation branch (9) extending from said input station (3) to said output station (4); said return branch (10) extending from said output station (4) to said input station (3); and varying means (11) being provided for varying said lengths (L1, L2) in complementary manner.

2. A store as claimed in Claim 1, characterized in that said varying means (11) comprise first transmission means (12) connected to the transportation branch (9) and adjustable to define, along the transportation branch (9), a first spiral (26) of adjustable length (L1); and second transmission means (13) connected to the return branch (10) and adjustable to define, along the return branch (10), a second spiral (27) presenting a length (L2) adjustable in complementary manner to the length (L1) of the first spiral (26).

3. A store as claimed in Claim 2, characterized in that said first transmission means (12) comprise a first supporting device (33) for supporting said first spiral (26); and said second transmission means (13) comprise a second supporting device (34) for supporting said second spiral (27); said varying means (11) comprising actuating means (35) for expanding and contracting said first (33) and second (34) supporting devices to vary the lengths (L1, L2) of said spirals (26, 27).

4. A store as claimed in Claim 3, characterized in that said first supporting device (33) comprises at least two first drums (15, 16) for transmission and support of said first spiral (26); said second supporting device (34) comprising at least two second drums (21, 22) for transmission and support of said second spiral (27); said actuating means (35) varying a center distance of said first drums (15, 16) and a center distance of said second drums (21, 22).

5. A store as claimed in Claim 4, characterized in that said first spiral (26) is wound about said first supporting device (33) with a first given pitch (P1); and said second spiral (27) is wound about said second supporting device (34) with a second given pitch (P2).

6. A store as claimed in Claim 5, characterized in that said first pitch (P1) and said second pitch (P2) are equal to each other.

7. A store as claimed in Claim 5, characterized in that said second pitch (P2) is less than said first pitch (P1).

8. A store as claimed in one of the foregoing Claims from 2 to 7, characterized in that said first spiral (26) and said second spiral (27) are located side by side.

9. A store as claimed in one of the foregoing Claims from 2 to 7, characterized in that said second spiral (27) is located inside said first spiral (26).

## Patentansprüche

1. Variierbarer Kapazitätsspeicher (1; 47) für längliche Objekte (2), insbesondere für Tabakerzeugnisse, wobei der Speicher (1; 47) eine Eingangsstation (3) und eine Ausgangsstation (4) umfaßt, die in Reihe entlang einer Bahn (P) angeordnet sind, auf welcher die länglichen Objekte (2) geführt werden; sowie Fördermittel (8) zur Förderung der länglichen Objekte (2), wobei die Fördermittel (8) sich zwischen der Eingangs- und der Ausgangsstation (3, 4) erstrecken und eine variable Länge aufweisen; **dadurch gekennzeichnet, daß** die Fördermittel (8) ein zusammenhängendes Endlos-Förderband umfassen, das durch einen Förderabschnitt (9) zum Transport der länglichen Objekte (2) und durch einen Rückführungsabschnitt (10) gebildet wird, wobei der Förderabschnitt (9) und der Rückführungsabschnitt (10) jeweils eine erste Länge (L1) und eine zweite Länge (L2) aufweisen, die komplementär zueinander sind; und der Förderabschnitt (9) sich von der Eingangsstation (3) zur Ausgangsstation (4) erstreckt; und der Rückführungsabschnitt (10) sich von der Ausgangsstation (4) zur Eingangsstation (3) erstreckt; und eine Variationseinrichtung (11) vorgesehen ist, um die Längen (L1, L2) in komplementärer Weise zu verändern.

2. Speicher nach Anspruch 1, **dadurch gekennzeichnet, daß** die Variationseinrichtung (11) eine erste Umlenkeinrichtung (12) umfaßt, die mit dem Förderabschnitt (9) verbunden und verstellbar ist, um entlang des Förderabschnittes (9) eine erste Spiralbahn (26) mit einstellbarer Länge (L1) zu bilden; und eine zweite Umlenkeinrichtung (13), welche mit dem Rückführungsabschnitt (10) verbunden und einstellbar ist, um entlang des Rückführungsabschnittes (10) eine zweite Spiralbahn (27) zu bilden, die eine zur Länge (L1) der ersten Spiralbahn (26) komplementär einstellbare Länge (L2) besitzt.

3. Speicher nach Anspruch 2, **dadurch gekennzeichnet, daß** die erste Umlenkeinrichtung (12) eine erste Halteeinrichtung (33) zur Abstützung der ersten Spiralbahn (26) umfaßt; und die zweite Umlenkeinrichtung (13) eine zweite Halteeinrichtung (34) zur Abstützung der zweiten Spiralbahn (27) umfaßt; wobei die Variationseinrichtung (11) eine Betätigungseinrichtung (35) zum Auseinander- und Zusammenführen der ersten (33) und zweiten (34) Halteeinrichtungen aufweist, um die Längen (L1, L2) der Spiralbahnen (26, 27) zu verändern.

4. Speicher nach Anspruch 3, **dadurch gekennzeichnet, daß** die erste Halteeinrichtung (33) mindestens zwei erste Trommeln (15, 16) zum Umlenken und Halten der ersten Spiralbahn (26) umfaßt; daß die zweite Halteeinrichtung (34) mindestens zwei zweite Trommeln (21, 22) zum Umlenken und Halten der zweiten Spiralbahn (27) umfaßt; und daß die Betätigungseinrichtung (35) einen mittleren Abstand der ersten Trommeln (15, 16) und einen mittleren Abstand der zweiten Trommeln (21, 22) verändert.

5. Speicher nach Anspruch 4, **dadurch gekennzeichnet, daß** die erste Spiralbahn (26) um die erste Halteeinrichtung (33) mit einer ersten vorgegebenen Steigung (P1) gewunden ist; und daß die zweite Spiralbahn (27) um die zweite Halteeinrichtung (34) mit einer zweiten vorgegebenen Steigung (P2) gewunden ist.

6. Speicher nach Anspruch 5, **dadurch gekennzeichnet, daß** die erste Steigung (P1) und die zweite Steigung (P2) einander gleich sind.

7. Speicher nach Anspruch 5, **dadurch gekennzeichnet, daß** die zweite Steigung (P2) geringer ist als die erste Steigung (P1).

8. Speicher nach einem der vorhergehenden Ansprüche 2 bis 7, **dadurch gekennzeichnet, daß** die erste Spiralbahn (26) und die zweite Spiralbahn (27) Seite an Seite zueinander angeordnet sind.

9. Speicher nach einem der vorhergehenden Ansprüche 2 bis 7, **dadurch gekennzeichnet, daß** die zweite Spiralbahn (27) innerhalb der ersten Spiralbahn (26) angeordnet ist.

## Revendications

1. Un magasin de capacité variable (1; 47) pour des objets (2) allongés, en particulier des produits en tabac, le magasin (1; 47) comprenant un poste d'entrée (3) et un poste de sortie (4) placés en série sur un chemin (P) sur lequel les objets allongés (2) sont amenés; et des moyens de transport (8) pour transporter lesdits éléments allongés (2), lesdits moyens de transport (8) s'étendant entre les postes d'entrée et de sortie (3, 4) et présentant une longueur variable; caractérisé en ce que lesdits moyens de transport (8) comprennent un transporteur sans frein continu (8) défini par un branchement de transport (9), pour transporter lesdits objets allongés (2), et par un branchement de retour (10), ledit branchement de transport (9) et ledit branchement de retour (10) présentant respectivement une première longueur (L1) et une deuxième longueur (L2) complémentaires l'une à l'autre ; ledit branchement de transport (9) s'étendant depuis ledit poste d'entrée (3) vers ledit poste de sortie (4); ledit branchement de retour (10) s'étendant depuis le poste de sortie (4) vers ledit poste d'entrée (3); et des moyens de variation (11) étant prévus pour faire varier lesdites longueurs (L1, L2) de manière complémentaire.

2. Un magasin selon la revendication 1, caractérisé en ce que lesdits moyens de variation (11) comprennent des premiers moyens de transmission (12), reliés au branchement de transport (9) et ajustables, pour définir, sur le branchement de transport (9), une première spirale (26) de longueur ajustable (L1); et des deuxièmes moyens de transmission (13) reliés au branchement de retour (10) et ajustables pour définir, sur le branchement de retour (10), une deuxième spirale (27) présentant une longueur (L2) ajustable de manière complémentaire envers la longueur (L1) de la première spirale (26).

3. Un magasin selon la revendication 2, caractérisé en ce que lesdits premiers moyens de transmission (12) comprennent un premier dispositif support (33) pour supporter ladite première spirale (26); et lesdits deuxième moyens de transmission (13) comprennent un deuxième dispositif support (34) pour supporter ladite deuxième spirale (27); lesdits moyens de variation (11) comprenant des moyens d'actionnement (35) pour étirer et contracter lesdits premier (33) et deuxième (34) dispositifs de transport, pour faire varier les longueurs (L1, L2) desdites spirales (26, 27).

4. Un magasin selon la revendication 3, caractérisé en ce que ledit premier dispositif support (33) comprend au moins deux premiers tambours (15, 16) pour la fonction de transmission et de support de ladite première spirale (26); ledit deuxième dispositif support (34) comprenant au moins deux deuxième tambours (21, 22) pour assurer la fonction de transmission et de support de ladite deuxième spirale (27); lesdits moyens d'actionnement (35) modifiant l'entraxe desdits premiers tambours (15, 16) et l'entraxe desdits deuxièmes tambours (21, 22).

5. Un magasin selon la revendication 4, caractérisé en ce que ladite première spirale (26) est enroulée autour dudit premier dispositif support (33) avec un premier pas (P1) donné; et ladite deuxième spirale (27) est enroulée autour dudit deuxième dispositif support (34) avec un deuxième pas (P2) donné.

6. Un magasin selon la revendication 5, caractérisé en ce que ledit premier pas (P1) et ledit deuxième pas (P2) sont identiques entre eux.

7. Un magasin selon la revendication 5, caractérisé en ce que ledit deuxième pas (P2) est inférieur audit premier pas (P1).

8. Un magasin selon l'une des revendications 2 à 7 précédentes, caractérisé en ce que ladite première spirale (26) et ladite spirale (27) sont placées côte à côte.

9. Un magasin selon l'une des revendications 2 à 7 précédentes, caractérisé en ce que ladite deuxième spirale (27) est placée à l'intérieur de ladite première spirale (26).
